(19) Europäisches Patentamt
European Patent Office
Office européen des brevets

(11) **EP 2 839 310 B1**

(12) **EUROPÄISCHE PATENTSCHRIFT**

(45) Veröffentlichungstag und Bekanntmachung des Hinweises auf die Patenterteilung:
**18.01.2017  Patentblatt 2017/03**

(21) Anmeldenummer: **13712538.1**

(22) Anmeldetag: **25.03.2013**

(51) Int Cl.:
**G01S 3/808** *(2006.01)*      **G01S 3/86** *(2006.01)*

(86) Internationale Anmeldenummer:
**PCT/EP2013/056233**

(87) Internationale Veröffentlichungsnummer:
**WO 2013/156263 (24.10.2013 Gazette 2013/43)**

(54) **VERFAHREN UND VORRICHTUNG ZUM RÄUMLICHEN FILTERN VON SCHALLWELLEN**

METHOD AND APPARATUS FOR SPATIALLY FILTERING SOUND WAVES

PROCÉDÉ ET DISPOSITIF DESTINÉS AU FILTRAGE SPATIAL D'ONDES SONORES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.04.2012  DE 102012008085**

(43) Veröffentlichungstag der Anmeldung:
**25.02.2015  Patentblatt 2015/09**

(73) Patentinhaber: **ATLAS ELEKTRONIK GmbH 28309 Bremen (DE)**

(72) Erfinder: **BOGNER, Thorsten 32791 Lage (DE)**

(56) Entgegenhaltungen:
**EP-A1- 1 107 016      DE-C1- 10 027 538**
**US-A1- 2008 247 274      US-B1- 6 914 854**
**US-B1- 7 319 640**

- **MORGERA S D ET AL: "Source-oriented adaptive beamforming", CIRCUITS, SYSTEMS AND SIGNAL PROCESSING, CAMBRIDGE, MS, US, Bd. 2, Nr. 4, 1. Januar 1983 (1983-01-01), Seiten 487-516, XP008108350, ISSN: 0278-081X**

EP 2 839 310 B1

**Beschreibung**

Die Erfindung betrifft ein Verfahren zum räumlichen Filtern von von einer oder mehreren Quellen abgestrahlten oder gesendeten, im Wasser sich ausbreitenden Schallwellen sowie eine Vorrichtung zum Ausführen eines derartigen Verfahrens.

Herkömmlicherweise dienen räumliche Filter, auch Beamformer genannt, der räumlichen Schallbündelung, um akustische Signale, die aus einer Steuerrichtung auf eine Empfangsanordnung einfallen, möglichst unverzerrt zu verstärken und Störsignale aus anderen Raumrichtungen zu unterdrücken.

Durch eine räumliche Ausdehnung der Empfangsanordnung mit einer Vielzahl von Wandlerelementen kann o.g. Richtwirkung durch Schallbündelung mittels der Empfangsanordnung erzielt werden. Die Empfangsanordnung kann derart ausgerichtet werden, um Signale aus einer gewünschten Steuerrichtung zu verstärken und Signale aus anderen Richtungen abzuschwächen. Dieses räumliche Ausrichten wird durch eine Richtcharakteristik der Empfangsanordnung beschrieben.

DE 100 27 538 C1 zeigt beispielsweise ein Verfahren zum Bestimmen der Einfallsrichtung von sich im Wasser ausbreitenden Schallwellen mittels einer akustischen Empfangsantenne. Bei einem derartigen konventionellen System zur Richtungsbildung, auch konventionelles Beamforming-System genannt, werden die Empfangssignale einer Gruppe von gemeinsam betriebenen Wandlern zur Bildung eines die Richtcharakteristik der Wandlergruppe bestimmenden Gruppensignals zeitverzögert und konphas (gleichphasig bzw. mit gleicher Phasenlage) aufaddiert. Die Hauptrichtung der Richtcharakteristik des Gruppensignals mit dem größten Empfangspegel wird dann als Einfallsrichtung der Schallwellen angegeben. Nachteilig bei derartigen Systemen ist jedoch, dass zusätzlich zum Nutzsignal auch unerwünschte Signalanteile empfangen werden, die nicht aus der zu bestimmenden Einfallsrichtung einfallen. Dies führt zu einem verringerten Signal-Rausch-Verhältnis sowie zu einer erhöhten Anfälligkeit gegenüber Störangriffen.

Eine Dämpfung der Störsignale, die aus Raumrichtungen abseits der gewünschten Steuerrichtung einfallen, variiert mit der Lage und Breite der Nebenkeulen in der Richtcharakteristik. Um diese Dämpfung der Signalanteile zu erhöhen, ist es möglich, die Richtcharakteristik der Empfangsanordnung derart zu steuern, dass die Nullstellen der Richtcharakteristik in Richtung der Störsignalquellen liegen. Dies wird üblicherweise durch die Verwendung von adaptiven Filtern bzw. adaptiven Beamformern erreicht.

Adaptive Filter passen sich den Empfangssignalen der Empfangsanordnung an, indem sie ihre Richtcharakteristik in Abhängigkeit dieser Signale verändern. Im Gegensatz zu konventionellen Filtern sind adaptive Filter jedoch sehr anfällig bezüglich Parameterschwankungen, beispielsweise wenn die Steuerrichtung nicht exakt angegeben wird. Abweichungen zwischen wahrer und geschätzter Richtung können zu starken Signalverzerrungen und ungewollter Verstärkung von Störsignalen führen, da im Zuge der Adaption die Nullstellen der Richtcharakteristik möglicherweise in Richtung der Steuerrichtung des Nutzsignals verschoben werden.

Ferner sind adaptive Filter empfindlich gegenüber einer fehlerhaften Ausrichtung der Wandlerelemente der Wandleranordnung. Derartige ungenaue Positionierungen der Wandlerelemente führen ebenfalls zu Signalverzerrungen. Adaptive Filter weisen somit den Nachteil auf, dass ihre Genauigkeit bei der räumlichen Filterung sehr stark von der Bestimmung eines der Steuerrichtung zugehörigen Steuervektors abhängt.

Zwar existieren von den adaptiven Filtern auch robuste Versionen, die einen bestimmten Anteil an Fehlern bei der Beschreibung der Wandleranordnung tolerieren. Sie erfordern jedoch einen wesentlich höheren Rechenaufwand.

Nach alledem liegt der Erfindung das Problem zugrunde, ein Verfahren zum räumlichen Filtern von sich im Wasser ausbreitenden Schallwellen zu schaffen, welches das Signal-Rausch-Verhältnis in Steuerrichtung verbessert und zudem Robustheit gegen mögliche Fehlanpassungen der Empfangsanordnung bei geringem Rechenaufwand bietet.

Die Erfindung löst dieses Problem durch die Merkmale eines Verfahrens zum räumlichen Filtern von im Wasser sich ausbreitenden Schallwellen gemäß Anspruch 1 sowie eine entsprechende Vorrichtung zum Ausführen des Verfahrens mit den Merkmalen des Anspruchs 8.

Zum räumlichen Filtern von sich im Wasser ausbreitenden Schallwellen werden diese von einer Empfangsanordnung mit einer Vielzahl elektroakustischer und/oder optoakustischer Wandler empfangen. Die von den Wandlern empfangene Schallenergie wird von einer oder mehreren Quellen abgestrahlt oder gesendet.

In einem ersten Schritt des erfindungsgemäßen Verfahrens wird in einem Transformationsmodul aus der empfangenen Schallenergie ein räumliches Spektrum, insbesondere ein Energiespektrum, über alle zu betrachtenden Steuerrichtungen erzeugt. Dabei entsprechen einzelne Maxima innerhalb des Energiespektrums den zugehörigen Quellen, dessen abgestrahlte oder gesendete Schallwellen in dem Energiespektrum dargestellt sind.

Diese Maxima werden entsprechend dem erfindungsgemäßen Verfahren in einem Quellenauswahlmodul als signifikante Pegel für jede zu betrachtende Steuerrichtung ausgewählt.

In einem Signalmodellmodul wird aus einer der Empfangsordnung zugehörigen Antennenantwort und aus den ausgewählten Pegeln eine Signalmodellmatrix ermittelt, wobei die Signalmodellmatrix eine N x N-Matrix ist und N der Anzahl der Wandlerelemente entspricht.

Bei der Antenennantwort a(k) handelt es sich um einen komplexen Vektor, welcher die Charakteristik der Empfangsordnung beschreibt, wenn eine ideale ebene Welle mit einer bestimmten Frequenz und einer bestimmten Ausbreitungsrichtung k auf die Empfangsanordnung treffen würde. Der Wellenzahlvektor $k = [k_x, k_y, k_z]$ gibt die Ausbreitungsrichtung der Welle an mit den Komponenten in x-, y- und z-Richtung. Es handelt sich bei der Antennenantwort a(k) um einen Erwartungswert.

In einem Quellensteuervektormodul wird aus der Antennenantwort der Empfangsanlage und der Signalmodellmatrix ein Quellensteuervektor ermittelt. Dadurch entsteht der Vorteil, dass alle signifikanten Quellen, die mittels des Quellenauswahlmoduls bestimmt wurden, bei Anwendung des Quellensteuervektors optimal vom Filter unterdrückt werden. Durch das Unterdrücken der signifikanten Quellen werden vorteilhaft auch die von diesen Quellen verursachten Nebenpegel unterdrückt.

In einem weiteren Schritt des erfindungsgemäßen Verfahrens wird nun in einem Filtersteuervektormodul für jede zu betrachtende Steuerrichtung überprüft, ob eine Quelle in dieser Steuerrichtung existiert und ein entsprechender Filtersteuervektor für diese Steuerrichtung ermittelt.

Für den Fall, dass in dieser Steuerrichtung keine Quellen existieren, wird der zu bestimmende Filtersteuervektor dem Quellensteuervektor gleichgesetzt. Das hat den Vorteil, dass aus dieser Steuerrichtung auch keine Störgrößen einfallen, da der Quellensteuervektor alle vorhandenen Quellen mit ihren Haupt- und Nebenpegeln optimal unterdrückt.

Für den Fall, dass in dieser Steuerrichtung eine Quelle existiert, wird der zu bestimmende Filtersteuervektor aus der Signalmodellmatrix, der Antennenantwort sowie dem ausgewählten Pegel zu dieser Steuerrichtung ermittelt.

Abschließend wird in einem Filtermodul ein optimierter Filtervektor unter Berücksichtigung des zuvor ermittelten Filtersteuervektors zum Durchführen des räumlichen Filterns der von einer oder mehreren Quellen abgestrahlten oder gesendeten Schallwellen ermittelt. Das Ziel der räumlichen Filterung ist es, entsprechende Filterkoeffizienten derart zu wählen, dass das Quellensignal möglichst gut rekonstruiert wird.

Mit dem vorstehend beschriebenen erfindungsgemäßen Verfahren lassen sich Umgebungsgeräusche bzw. unerwünschte Störgeräusche vorteilhaft reduzieren, da die Unterdrückung aller signifikanter Quellen außerhalb der zu betrachtenden Steuerrichtung zu einer Unterdrückung aller entsprechender Nebenpegel führt und somit zu einer Verringerung der effektiven Keulenbreite der Empfangsanordnung führt.

Ferner werden durch die Konstruktion der Filtersteuervektoren lediglich die Signale unterdrückt, die einen ausreichenden Abstand von der zu betrachtenden Steuerrichtung haben. Das liefert den Vorteil, dass der erfindungsgemäße Filter robust ist und stabil bei möglichen Fehlanpassungen der Wandler der Empfangsanordnung.

Darüber hinaus arbeitet das erfindungsgemäße Verfahren besonders effektiv, da die Signalmodellmatrix nicht für jede Steuerrichtung einzeln bestimmt werden muss. Dadurch wird der Rechenaufwand vorteilhaft reduziert.

In einer bevorzugten Ausführungsform der Erfindung wird in dem Transformationsmodul das räumliche Spektrum in mehrere Schmalband-Spektren mit voneinander verschiedenen Mittenfrequenzen zerlegt.

Handelt es sich bei den empfangenen Schallwellen um breitbandige Empfangssignale, müssen diese zum räumlichen Filtern im Frequenzbereich in einzelne Spektralkomponenten zerlegt werden. In dem erfindungsgemäßen Verfahren werden bevorzugt Schmalband-Spektren betrachtet, deren ausgewählter Bereich $[\Omega_0 - \Delta\Omega, \Omega_0 + \Delta\Omega]$ um die Mittenfrequenz $\Omega_0$ genügend klein ist. Da die ermittelte Signalmodellmatrix abhängig ist von der Betriebsfrequenz, lassen sich vorteilhaft die Signalmodellmatrizen für die ermittelten Mittenfrequenzen $\Omega_0$ bestimmen.

In einer weiteren bevorzugten Ausführungsform der Erfindung wird die Ermittlung des optimierten Filtersteuervektors parallel für alle ermittelten Schmalband-Spektren durchgeführt. Eine derartige unabhängige Verarbeitung voneinander ermöglicht vorteilhaft eine Echtzeitverarbeitung für alle Steuerrichtungen des räumlichen Filters.

Gemäß einer weiteren Ausführungsform der Erfindung ist das Schwellenwertmodul derart ausgestaltet, um einen Schwellenwert zum Auswählen der signifikanten Pegel aus dem räumlichen Spektrum über die zu betrachtenden Steuerrichtungen zu ermitteln. Zur Ermittlung des Schwellenwertes wird bevorzugt die Standardabweichung der Pegel berücksichtigt. Beispielsweise ist ein mögliches Kriterium zur Bestimmung des Schwellenwertes, dass der Pegel um ein σ über dem räumlich gemittelten Pegel liegt, wobei σ der Standardabweichung entspricht. Die signifikanten Pegel werden vorteilhaft mit der zugehörigen Frequenz und der zugehörigen Steuerrichtung für das weitere Verfahren festgehalten.

Die Erfindung ist jedoch nicht auf die Berücksichtigung der Standardabweichung beschränkt. Vielmehr sind jedwede Verfahren zur Bestimmung eines Schwellenwertes denkbar, welche eine zuverlässige Aussage über vorhandene Quellen anhand deren Amplitude ermöglichen, so dass die Pegel aller vorhandenen signifikanten Quellen von dem Schwellenwert erfasst werden.

In einer weiteren bevorzugten Ausführungsform der Erfindung wird der Schwellenwert zum Auswählen der signifikanten Pegel winkelabhängig festgelegt. Mittels eines winkelabhängigen Schwellenwertes lassen sich vorteilhaft räumliche Inhomogenitäten berücksichtigen.

In einer weiteren Ausführungsform der Erfindung wird mittels des Filtersteuervektormoduls der Filtersteuervektor bei Vorhandensein wenigstens einer Quelle über mehrere benachbarte Steuerrichtungen ermittelt. Dadurch wird in einem breiten Winkelbereich die Nebenpegelunterdrückung ausgeschaltet. Das hat den Vorteil, dass sich die Robustheit des räumlichen Filters entsprechend erhöht.

Gemäß einer weiteren Ausführungsform der Erfindung erfolgt die Überprüfung, ob eine Quelle in der zu betrachtenden Steuerrichtung existiert, anhand eines Verfahrens zur Bestimmung der Einfallsrichtung, insbesondere eines konventionellen Richtungsbildungs-Verfahrens, oder anhand von Vorkenntnissen von Emitterstandorten. Da zum Ausblenden der unterwünschten Pegel ein derartiges konventionelles Richtungsbildungs-Verfahren verwendet wird, wird vorteilhaft eine höhere Stabilität erzeugt als bei herkömmlichen adaptiven Verfahren.

Gemäß einer alternativen Ausführungsform der Erfindung weist die erfindungsgemäße Vorrichtung ein oder mehrere Mittel zum Durchführen des vorstehend beschriebenen Verfahrens auf.

Weitere vorteilhafte Ausführungsformen der Erfindung ergeben sich aus den Unteransprüchen sowie aus den anhand der Zeichnung näher erläuterten Ausführungsbeispielen. In der Zeichnung zeigen:

Fig. 1    ein Blockschaltbild eines konventionellen Richtungsbildners und

Fig. 2    ein Blockschaltbild zur Erläuterung des erfindungsgemäßen Verfahrens.

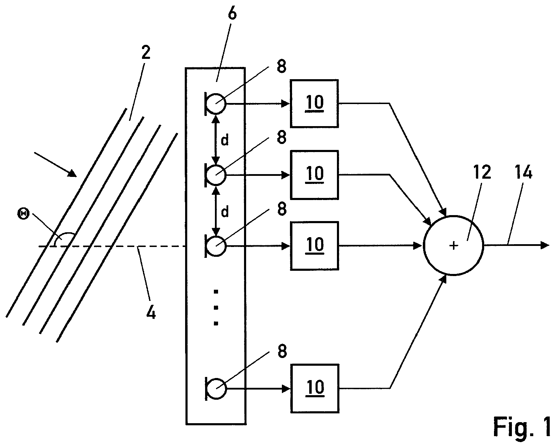

Fig. 1 zeigt ein Blockschaltbild eines konventionellen Richtungsbildners bzw. Beamformers. Betrachtet wird der Fall, dass eine Wellenfront 2 einer ebenen Welle aus einer anderen Richtung als der Querabrichtung 4 auf eine lineare Empfangsanordnung 6 mit N Wandlerelementen 8 auftrifft. Aufgrund der räumlichen Abstände d zwischen den einzelnen Wandlerelementen 8 entsteht eine zeitliche Verschiebung der Empfangssignale der Wandlerelemente 8. Diese Zeitverschiebungen werden durch Verzögerungsglieder 10 derart ausgeglichen, dass anschließend die Empfangssignale der Wandlerelemente 8 kohärent aufaddiert 12 werden. Entsprechend Figur 1 gilt für ein Ausgangssignal 14 des konventionellen Richtungsbildners:

$$y(t) = \sum_{i=1}^{N} \omega_i \, g_i(t - \tau_i) \qquad\qquad (1)$$

mit $\omega_i$ als Amplitudengewichtungsfunktion der Verzögerungsglieder 10 zum Optimieren der Hauptkeulenform der Richtcharakteristik sowie zum Bestimmen der Unterdrückung der Signale aus anderen Richtungen und $g_i(t)$ als Empfangssignal am i-ten Wandlerelement 8. Die zeitliche Verzögerung $\tau_i$ wird dabei derart gewählt, so dass die zeitliche Verschiebung zwischen den Empfangssignalen der einzelnen Wandlerelemente 8 ausgeglichen wird.

Statt der zeitlichen Verzögerung zwischen den einzelnen Wandlerelementen 8 ist es denkbar im Frequenzbereich eine Phasenverschiebung zwischen den Empfangssignalen zu betrachten. Das hat den Vorteil, dass das Verfahren zum räumlichen Filtern unabhängig von der Abtastfrequenz des Empfangssignals ist. Die Steuerung der Hauptkeule kann dann durch Phasendrehung in beliebig kleinen Schritten erfolgen.

In Fig. 1 trifft eine ebene Wellenfront 2 unter einem Einfallswinkel $\theta$ auf eine Empfangsanordnung 6. Unter Berücksichtigung eines Referenzwandlers, auf den sich die Laufzeitdifferenzen und somit Phasenverschiebungen beziehen, lässt sich ein Steuervektor für N Wandlerelemente als Antennenantwort auf räumliche Wellen angeben:

$$a(\omega,\theta) = [1, r_2(\omega,\theta),..., r_N(\omega,\theta)]^T, \qquad\qquad (2)$$

$$\text{mit} \quad r_k(\omega,\theta) = \exp\{-j\omega \frac{d_k}{c} \sin\theta\}, k = 1...N \text{ und } d_k = (k-1)d \,.$$

Der Steuervektor lässt sich zur Berechnung der Richtcharakteristik oder bei adaptiven Richtungsbildnern für die Formulierung von Nebenbedingungen verwenden. Durch Beeinflussung der Laufzeiten und geeigneter Kombination der Eingangssignale kann nämlich eine angepasste Richtcharakteristik erzielt werden. Somit können durch entsprechende Keulenformung die Signale aus einzelnen Richtungen räumliche extrahiert werden. Derartige konventionelle Richtungsbildner empfangen jedoch auch Signale, die nicht aus der Steuerrichtung einfallen. Herkömmliche adaptive Richtungsbildner hingegen passen ihre Filterkoeffizienten signal- und situationsabhängig an, was jedoch zu einem wesentlich höheren Rechenaufwand führt.

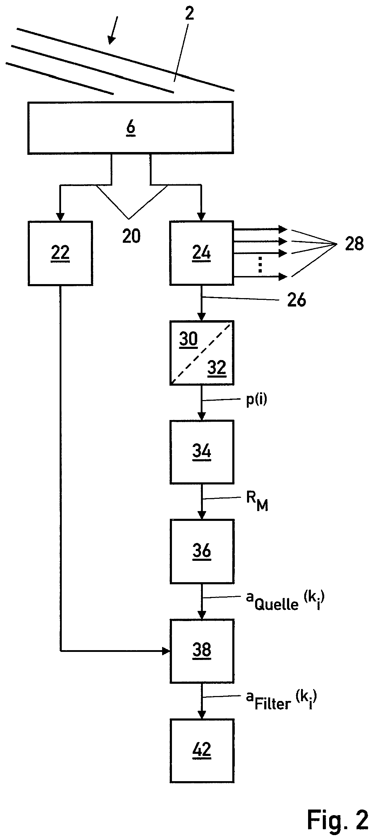

Fig. 2 zeigt ein Blockschaltbild eines Ausführungsbeispiels des erfindungsgemäßen Verfahrens bei dem eine ebene Wellenfront 2 auf eine Empfangsanordnung 6 trifft. Die Empfangsanordnung 6 weist eine Vielzahl elektroakustischer und/oder optoakustischer Wandler zum Bilden von Empfangssignalen 20 auf. Diese Empfangssignale 20 werden einem konventionellen Richtungsbildner 22, beispielsweise einem Richtungsbildner gemäß Fig. 1, sowie einem Transformationsmodul 24 zugeführt. Das erfindungsgemäße Verfahren nutzt ein Signalmodell, um basierend auf den Eingangsdaten adaptiv mögliche Störquellen auszublenden. Signale, die aus einem wählbaren Winkelbereich um die Steuerrichtung einfallen, werden vorteilhafterweise nicht unterdrückt.

Der konventionelle Richtungsbildner 22 dient dazu, im laufenden Verfahren die Einfallsrichtung einer oder mehrerer signifikanter Quellen zu ermitteln. Die Erfindung ist jedoch nicht auf die Verwendung eines Richtungsbildners gemäß Fig. 1 beschränkt. Vielmehr sind weitere Verfahren zur Bestimmung der Einfallsrichtung einer signifikanten Quelle möglich. Beispielsweise lässt sich aus mehrkanaligen Verfahren mit sogenannten Tracking-Algorithmen, welche eine Nachführung bzw. Spurbildung von bewegten Objekten ermöglichen, die Einfallsrichtung ermitteln. Ferner können auch Richtungsinformationen aus anderen Bereichen, wie beispielsweise Bildern, Infrarotsensoren oder ähnliches sowie aus Vorkenntnissen von Emitterstandorten erlangt werden.

Das Transformationsmodul 24 dient dazu, dass erfindungsgemäße räumliche Filtern bzw. die Richtungsbildung im Frequenzbereich statt im Zeitbereich durchzuführen. Dazu wird aus den Empfangssignalen 20, bevorzugt mittels einer Fouriertransformation, ein räumliches Energiespektrum erstellt.

Handelt es sich bei den empfangenen Schallwellen 2 um monofrequente oder sehr schmalbandige Signale, so lässt sich das Spektrum direkt angeben. Handelt es sich hingegen bei den empfangenen Schallwellen 2, um breitrandige Signale, werden in dem Transformationsmodul 24 entsprechende Schmalband-Spektren über den zu betrachtenden Winkelbereich erzeugt, um sicher zu stellen, dass für jede Frequenz des Signalspektrums ein entsprechender Phasenterm der Antennenantwort a(k) berechnet wird.

Das erfindungsgemäße Verfahren wird der Einfachheit halber anhand von Fig. 2 für ein ausgewähltes Schmalband-Spektrum 26 beschrieben. Sind jedoch mehrere Schmalband-Spektren 28 vorhanden, wird die im Folgenden beschriebene Durchführung des erfindungsgemäßen Verfahrens parallel für alle Schmalband-Spektren 28 umgesetzt.

In einem Quellenauswahlmodul 30 werden dann signifikante Pegel aus dem Schmalband-Spektrum 26 ausgewählt. Bevorzugt weist das Quellenauswahlmodul 30 ein Schwellenwertmodul 32 auf, in dem ein oder mehrere Schwellenwerte bestimmt werden. Ein mögliches Kriterium beispielsweise ist, dass der Schwellenwert aus der Standardabweichung $\sigma$ ermittelt wird, so dass von dem Quellenauswahlmodul 30 nur diejenigen Pegel ausgewählt werden, deren Pegel um 1 $\sigma$ über dem räumlich gemittelten Pegel liegen.

Handelt es sich bei der Standardabweichung $\sigma$ um eine winkelabhängige Größe, kann der Schwellenwert ebenfalls winkelabhängig ermittelt werden, um evtl. vorhandene räumliche Inhomogenitäten innerhalb des Energiespektrums zu berücksichtigen.

Die signifikanten Pegel p(i) werden dann einem Signalmodellmodul 34 übergeben, wobei i die zugehörige Richtung der signifikanten Quelle angibt. Das Signalmodellmodul 34 dient dazu, aus einer zu der Empfangsanordnung 6 zugehörigen Antennenantwort a(k) und den ausgewählten signifikanten Pegeln p(i) eine Signalmodellmatrix $R_M$ zu ermitteln:

$$R_M = \sum_i p(i)a(k_i)a^{T^*}(k_i), \qquad (3)$$

wobei $(\bullet)^T$ die transponierte Schreibweise des Vektors $(\bullet)$ bezeichnet und $(\bullet)^*$ den entsprechenden konjugiert komplexen. p(i) entsprechen den reellen Pegeln der signifikanten Quellen und $a(k_i)$ stellen die zugehörigen Antennenantworten dar mit k als komplexen Wellenzahlvektor.

Bei der Signalmodelmatrix $R_M$ handelt es sich um eine komplexe N x N -Matrix, die vorteilhafterweise nur einmal für alle zu betrachtenden Steuerrichtungen pro Schmalband-Spektrum 26/28 ermittelt wird, mit N = Anzahl der Wandlerelemente der Empfangsanordnung 6. Dadurch, dass das Signalmodell die relevanten Informationen der Eingangssignale repräsentiert, erfolgt die Störunterdrückung adaptiv.

Mittels dieser Signalmodellmatrix $R_M$ lassen sich alle signifikanten Quellen in dem räumlichen Energiespektrum optimal unterdrücken. Dazu wird in einem Quellensteuervektormodul 36 adaptiv ein Quellensteuervektor $a_{Quelle}(k_i)$ ermittelt:

$$a_{Quelle}(k_i) = R_M^{-1} a(k_i) \qquad (4)$$

Es handelt sich bei dem Quellensteuervektor $a_{Quelle}(k_i)$ um eine Hilfsgröße zur Unterdrückung der unerwünschten Signalanteile, da eine räumliche Filterung mit dem Quellensteuervektor $a_{Quelle}(k_i)$ alle Signalanteile der signifikanten Quellen optimal unterdrückt. Dabei werden nur Signale mit einem definierbaren, hinreichend großen Winkelabstand zur Steuerrichtung unterdrückt. Bevorzugt beträgt der Winkelabstand eine Keulenbreite. Um die Robustheit des Filters bzw. des Richtungsbildners zu erhöhen, ist es jedoch möglich, den Winkelabstand entsprechend zu erhöhen.

Vorteilhafterweise braucht die Matrix $R_M^{-1}$ ebenfalls nur einmalig für jedes Schmalband-Spektrum berechnet werden und gilt für alle zu betrachtenden Steuerrichtungen. Durch die Verwendung eines derartigen adaptiven Quel-

lensteuervektors $a_{Quelle}(k_i)$ erfolgt die Störunterdrückung datenbasiert anhand des Signalmodells.

In einem Filtersteuervektormodul 38 wird der eigentliche Filtersteuervektor $a_{Filter}(k_i)$ zum räumlichen Filtern der empfangenen Schallwellen bestimmt.

Dazu wird zunächst für jede Steuerrichtung überprüft, ob der konventionelle Richtungsbildner 22 in dieser Steuerrichtung eine signifikante Quelle detektiert hat.

Für den Fall, dass der konventionelle Richtungsbildner 22 in dieser Steuerrichtung keine Quelle erkannt hat, wird dem Filtersteuervektor $a_{Filter}(k_i)$ der zuvor ermittelte Quellensteuervektor $a_{Quelle}(k_i)$ zugewiesen. Dadurch werden alle signifikanten Quellen mitsamt ihren Nebenpegeln unterdrückt.

Für den Fall, dass der konventionelle Richtungsbildner 22 in dieser Steuerrichtung eine Quelle erkannt hat, wird der Filtersteuervektor $a_{Filter}(k_i)$ aus der Antennenantwort $a(k_i)$, der Signalmodellmatrix $R_M$ und dem ausgewählten Pegel p(i) zu dieser Steuerrichtung ermittelt:

$$a_{Filter}(k_i) = (R_M - p(i)a(k_i)a^{T^*}(k_i))^{-1} a(k_i) \qquad (5)$$

Um den Filtersteuervektor $a_{Filter}(k_i)$ möglichst effizient zu berechnen, wird vorteilhafterweise folgende Matrix-Identität genutzt:

$$(R_M - H)^{-1} = R_M^{-1} + \frac{1}{1 + Spur\, H R_M^{-1}} R_M^{-1} H R_M^{-1} \qquad (6)$$

wobei H eine Matrix mit Rang 1 ist und "Spur" der Summe der Hauptdiagonalelemente der Matrix $(H R_M^{-1})$ entspricht.

Um die Robustheit des räumlichen Filters zu erhöhen, ist es möglich, den Winkelbereich um die zu betrachtende Steuerrichtung, in dem die Nebenpegelunterdrückung deaktiviert wird, auszuweiten. Dazu wird der Term $p(i)a(k_i)a^{T^*}(k_i)$ aus Gl. (5) durch eine entsprechende Summe über i Steuerrichtungen ersetzt. In diesem Fall wird Gl. (6) rekursiv genutzt.

Anhand der derart ermittelten Filtersteuervektoren $a_{Filter}(k_i)$ für die zu bestimmenden Steuerrichtungen wird in einem Filtermodul 42 ein Filtervektor zum Durchführen des räumlichen Filterns der von einer oder mehreren Quellen abgestrahlten oder gesendeten Schallwellen ermittelt.

Da nicht für jede Steuerrichtung eine Matrix invertiert/zerlegt werden muss sondern lediglich ein Matrixprodukt berechnet werden muss, reduziert sich vorteilhaft der Rechenaufwand des erfindungsgemäßen Verfahrens, wodurch der Einsatz des erfindungsgemäßen Verfahrens in Echtzeit möglich ist. Dabei ist die Unterdrückung von Störquellen und Nebenpegeln des erfindungsgemäßen Verfahrens vergleichbar mit herkömmlichen adaptiven Verfahren, wie bspw. dem Robust Capon Beamformer, bei einem wesentlich geringeren Rechenaufwand. Ferner sind die Auswirkungen von Fehlanpassungen ähnlich klein wie bspw. beim konventionellen Richtungsbildner, da die Störunterdrückung datenbasiert anhand des Signalmodells erfolgt, was zu einer größeren Robustheit als bei herkömmlichen adaptiven Filtern führt.

Sämtliche in der vorstehenden Beschreibung sowie in den Ansprüchen genannten Merkmale sind erfindungsgemäß sowohl einzeln als auch in beliebiger Kombination miteinander einsetzbar. Die Offenbarung der Erfindung ist daher nicht auf die beschriebenen bzw. beanspruchten Merkmalskombinationen beschränkt. Vielmehr sind alle Kombinationen von Einzelmerkmalen als offenbart zu betrachten.

**Patentansprüche**

1. Verfahren zum räumlichen Filtern von von einer oder mehreren Quellen abgestrahlten oder gesendeten, im Wasser sich ausbreitenden Schallwellen (2), die mittels einer Empfangsanordnung (6) mit einer Vielzahl elektroakustischer und/oder optoakustischer Wandler (8) zum Bilden von Empfangssignalen (20) empfangen werden, **dadurch gekennzeichnet, dass** das Verfahren folgende Schritte aufweist:

    - Bilden eines räumlichen Energiespektrums aus den Empfangssignalen (20) über alle zu betrachtenden Steuerrichtungen,
    - Auswählen signifikanter Pegel (p(i)) aus dem Energiespektrum für jede zu betrachtende Steuerrichtung (i),
    - Ermitteln einer Signalmodellmatrix ($R_M$) aus einer der Empfangsanordnung (6) zugehörigen Antennenantwort ($a(k)$) und den ausgewählten Pegeln (p),
    - Ermitteln eines Quellensteuervektors ($a_{Quelle}(k)$) aus der Antennenantwort ($a(k)$) und der Signalmodellmatrix ($R_M$),
    - Überprüfen mittels eines Filtersteuervektormoduls (38) für jede zu betrachtende Steuerrichtung (i), ob eine Quelle in dieser Steuerrichtung (i) existiert,

- Ermitteln eines Filtersteuervektors ($a_{Filter}(k)$), wobei für den Fall, dass keine Quelle in der zu betrachtenden Steuerrichtung (i) existiert, der Filtersteuervektor ($a_{Filter}(k)$) dem zuvor ermittelten Quellensteuervektor ($a_{Quelle}(k)$) entspricht oder für den Fall, dass eine Quelle in der zu betrachtenden Steuerrichtung (i) existiert, der Filtersteuervektor ($a_{Filter}(k)$) aus der Signalmodellmatrix ($R_M$), der Antennenantwort ($a(k)$) und dem ausgewählten Pegel p(i) zu dieser Steuerrichtung (i) ermittelt wird und

- Ermitteln eines optimierten Filtervektors unter Berücksichtigung des Filtersteuervektors ($a_{Filter}(k)$) zum Durchführen des räumlichen Filterns der von einer Quelle abgestrahlten oder gesendeten Schallwellen (2).

2. Verfahren nach Anspruch 1,
**dadurch gekennzeichnet, dass**
das räumliche Energiespektrum in mehrere Schmalband-Spektren mit voneinander verschiedenen Mittenfrequenzen zerlegt wird.

3. Verfahren nach Anspruch 2,
**dadurch gekennzeichnet, dass**
das Ermitteln des optimierten Filtersteuervektors ($a_{Filter}(k)$) parallel für alle ermittelten Schmalband-Spektren durchgeführt wird.

4. Verfahren nach einem der vorhergehenden Ansprüche,
**dadurch gekennzeichnet, dass**
ein Schwellenwert zum Auswählen der signifikanten Pegel (p) aus dem räumlichen Energiespektrum anhand der Standardabweichung ($\sigma$) der Pegel (p) ermittelt wird, wobei diejenigen Pegel (p) als signifikante Pegel (p) ausgewählt werden, deren Amplitude den Schwellenwert überschreiten.

5. Verfahren nach Anspruch 4,
**dadurch gekennzeichnet, dass**
der Schwellenwert zum Auswählen der signifikanten Pegel (p) winkelabhängig festgelegt wird.

6. Verfahren nach einem der vorhergehenden Ansprüche,
**dadurch gekennzeichnet, dass**
der Filtersteuervektor ($a_{Filter}(k)$) bei Vorhandensein wenigstens einer Quelle über mehrere benachbarte Steuerrichtungen (i) ermittelt wird.

7. Verfahren nach einem der vorhergehenden Ansprüche,
**dadurch gekennzeichnet, dass**
die Überprüfung, ob eine Quelle in Steuerrichtung (i) existiert, anhand eines Verfahrens zur Bestimmung der Einfallsrichtung, insbesondere konventionellen Beamforming-Verfahrens (22), oder anhand von Vorkenntnissen von Emitterstandorten durchgeführt wird.

8. Vorrichtung zur räumlichen Filterung von von einer oder mehreren Quellen abgestrahlten oder gesendeten, im Wasser sich ausbreitenden Schallwellen (2), die mittels einer Empfangsanordnung (6) mit einer Vielzahl elektroakustischer und/oder optoakustischer Wandler (8) zum Bilden von Empfangssignalen (20) empfangbar sind, **gekennzeichnet durch** folgende Komponenten:

- ein Transformationsmodul (24), welches derart ausgestaltet ist, um aus den Empfangssignalen (20) ein räumliches Energiepektrum über alle zu betrachtenden Steuerrichtungen zu bilden,
- ein Quellenauswahlmodul (30), welches derart ausgestaltet ist, um signifikante Pegel (p(i)) aus dem räumlichen Spektrum für jede zu betrachtende Steuerrichtung (i) auszuwählen,
- ein Signalmodellmodul (34), welches derart ausgestaltet ist, um eine Signalmodellmatrix ($R_M$) aus der Empfangsanordnung (6) zugehörigen Antennenantwort ($a(k)$) und den ausgewählten Pegeln (p) zu ermitteln,
- ein Quellensteuervektormodul (36), welches derart ausgestaltet ist, um einen Quellensteuervektor ($a_{Quelle}(k)$) aus der Antennenantwort ($a(k)$) und der Signalmodellmatrix ($R_M$) zu ermitteln,
- ein Filtersteuervektormodul (38), welcher derart ausgestaltet ist, um für jede Steuerrichtung (i) zu überprüfen, ob eine Quelle in dieser Steuerrichtung (i) existiert und um einen Filtersteuervektor ($a_{Filter}(k)$) der zu betrachtenden Steuerrichtung (i) zu ermitteln, wobei für den Fall, dass keine Quelle in Steuerrichtung (i) existiert, der Filtersteuervektor ($a_{Filter}(k)$) dem zuvor ermittelten Quellensteuervektor ($a_{Quelle}(k)$) entspricht oder für den Fall, dass eine Quelle in der zu betrachtenden Steuerrichtung (i) existiert, der Filtersteuervektor ($a_{Filter}(k)$)

aus der Signalmodellmatrix ($R_M$), der Antennenantwort ($a(k)$) und dem ausgewählten Pegel p(i) zu dieser Steuerrichtung (i) ermittelbar ist und

- ein Filtermodul (42), welches derart ausgestaltet ist, um einen optimierten Filtervektor zum Durchführen des räumlichen Filterns der von einer Quelle abgestrahlten oder gesendeten Schallwellen (2) unter Berücksichtigung des Filtersteuervektors ($a_{Filter}(k)$) zu ermitteln.

9. Vorrichtung nach Anspruch 8,
**gekennzeichnet durch**
eine weitere Ausgestaltung des Transformationsmoduls (24) derart, um das räumliche Energiespektrum in mehrere Schmalband-Spektren mit voneinander verschiedenen Mittenfrequenzen zu zerlegen.

10. Vorrichtung nach Anspruch 9,
**gekennzeichnet durch**
Mittel zur parallelen Durchführung der Ermittlung des Filtersteuervektors ($a_{Filter}(k)$) parallel für alle ermittelten Schmalband-Spektren.

11. Vorrichtung nach einem der Ansprüche 8 bis 10,
**gekennzeichnet durch**
ein Schwellenwertmodul (32), welches derart ausgestaltet ist, um einen Schwellenwert zum Auswählen der signifikanten Pegel (p) aus dem räumlichen Energiespektrum anhand der Standardabweichung ($\sigma$) der Pegel (p) zu ermitteln, wobei diejenigen Pegel (p) als signifikante Pegel (p) auswählbar sind, deren Amplituden den Schwellenwert überschreiten.

12. Vorrichtung nach Anspruch 11,
**gekennzeichnet durch**
eine weitere Ausgestaltung des Schwellenwertmoduls (32) derart, um den Schwellenwert zum Auswählen der signifikanten Pegel (p) winkelabhängig festzulegen.

13. Vorrichtung nach einem der Ansprüche 8 bis 12,
**gekennzeichnet durch**
eine weitere Ausgestaltung des Filtersteuervektormoduls (38) derart, um den Filtersteuervektor ($a_{Filter}(k)$) bei Vorhandensein wenigstens einer Quelle über mehrere benachbarte Steuerrichtungen (i) zu ermitteln.

14. Vorrichtung nach einem der Ansprüche 8 bis 13,
**gekennzeichnet durch**
eine weitere Ausgestaltung des Filtersteuervektormoduls (38) derart, um zu überprüfen, ob eine Quelle in Steuerrichtung (i) existiert anhand eines Verfahrens zur Bestimmung der Einfallsrichtung, insbesondere eines konventionellen Beamforming-Verfahrens (22), oder anhand von Vorkenntnissen von Emitterstandorten.

## Claims

1. Method for the spatial filtering of acoustic waves (2), which are radiated or transmitted by one or more sources and propagate in water, and which are received by a receiving arrangement (6) with a plurality of electroacoustic and/or optoacoustic transducers (8) for forming received signals (20), **characterised by** that the method has the following steps:

- formation of a spatial energy spectrum from the received signals (20) over all control directions to be considered,
- selection of significant levels (p(i)) from the energy spectrum for each control direction (i) to be considered,
- determination of a signal model matrix (RM) from an antenna response (a(k)) related to the receiving arrangement (6) and the selected levels (p),
- determination of a source control vector (aSource(k)) from the antenna response (a(k)) and the signal model matrix (RM),
- checking by means of a filter control vector module (38) for each control direction (i) to be considered whether a source exists in this control direction (i),
- determination of a filter control vector (aFilter(k)), wherein for the case that no source exists in the control direction (i) to be considered, the filter control vector (aFilter(k)) corresponds to the previously determined source control vector (aSource(k)) or for the case that a source exists in the control direction (i) to be considered, the filter control vector (aFilter(k)) is determined from the signal model matrix (RM), the antenna response (a(k)) and the selected level p(i) for this control direction (i) and
- determination of an optimised filter vector taking account of the filter control vector (aFilter(k)) for executing the spatial filtering of the acoustic waves (2) radiated or transmitted by a source.

2. Method according to claim 1,
**characterised by**
that the spatial energy spectrum is broken down into several narrow band spectra with centre frequencies that differ from one another.

3. Method according to claim 2,
**characterised by**
that the determination of the optimised filter control vector (aFilter(k)) is carried out in parallel for all narrow band spectra determined.

4. Method according to one of the preceding claims,
**characterised by**
that a threshold value is determined for selecting the significant levels (p) from the spatial energy spectrum with reference to the standard deviation (ó) of the levels (p), wherein those levels (p) whose amplitude exceeds the threshold value are selected as significant levels (p).

5. Method according to claim 4,
**characterised by**
that the threshold value for selecting the significant levels (p) is determined dependent on the angle.

6. Method according to one of the preceding claims,
**characterised by**
that the filter control vector (aFilter(k)) is determined in the presence of at least one source over several adjacent control directions (i).

7. Method according to one of the preceding claims,
**characterised by**
that the checking of whether a source exists in the control direction (i) is carried out with reference to a method for determining the input direction, in particular a conventional beamforming method (22), or with reference to prior knowledge of emitter locations.

8. Device for the spatial filtering of acoustic waves (2), which are radiated or transmitted by one or more sources and propagate in water, and which can be received by a receiving arrangement (6) with a plurality of electroacoustic and/or optoacoustic transducers (8) for forming received signals (20), **characterised by** the following components:

- a transformation module (24), which is configured in such a way as to form a spatial energy spectrum from the received signals (20) over all control directions to be considered,
- a source selection module (30), which is configured in such a way as to select significant levels (p(i)) from the spatial spectrum for each control direction (i) to be considered,
- a signal model module (34), which is configured in such a way as to determine a signal model matrix (RM) from the antenna response (a(k)) related to the receiving arrangement (6) and the selected levels (p),
- a source control vector module (36), which is configured in such a way as to determine a source control vector (aSource(k)) from the antenna response (a(k)) and the signal model matrix (RM),
- a filter control vector module (38), which is configured in such a way as to check for each control direction (i) whether a source exists in this control direction (i) and to determine a filter control vector (aFilter(k)) of the control direction (i) to be considered, wherein for the case that no source exists in the control direction (i), the filter control vector (aFilter(k)) corresponds to the previously determined source control vector (aSource(k)) or for the case that a source exists in the control direction (i) to be considered, the filter control vector (aFilter(k)) can be determined from the signal model matrix (RM), the antenna response (a(k)) and the selected level p(i) for this control direction (i) and
- a filter module (42), which is configured in such a way as to determine an optimised filter vector for executing the spatial filtering of the acoustic waves (2) radiated or transmitted by a source, taking account of the filter control vector (aFilter(k)).

9. Device according to claim 8,
   **characterised by**
   another configuration of the transformation module (24) in such a way as to break down the spatial energy spectrum into several narrow band spectra with centre frequencies that differ from one another.

10. Device according to claim 9,
    **characterised by**
    means for the parallel execution of the determination of the filter control vector (aFilter(k)) in parallel for all narrow band spectra determined.

11. Device according to one of claims 8 to 10,
    **characterised by**
    a threshold value module (32), which is configured in such a way as to determine a threshold value for selecting the significant levels (p) from the spatial energy spectrum with reference to the standard deviation (ó) of the levels (p), wherein those levels (p) whose amplitudes exceed the threshold value can be selected as significant levels (p).

12. Device according to claim 11,
    **characterised by**
    another configuration of the threshold value module (32) in such a way as to establish the threshold value for selecting the significant levels (p) dependent on the angle.

13. Device according to one of claims 8 to 12,
    **characterised by**
    another configuration of the filter control vector module (38) in such a way as to determine the filter control vector (aFilter(k)) in the presence of at least one source over several adjacent control directions (i).

14. Device according to one of claims 8 to 13,
    **characterised by**
    another configuration of the filter control vector module (38) in such a way as to check whether a source exists in the control direction (i) with reference to a method for determining the input direction, in particular a conventional beamforming method (22), or with reference to prior knowledge of emitter locations.

**Revendications**

1. Procédé destiné au filtrage spatial d'ondes sonores (2) réfléchies ou émises par une ou plusieurs sources et se propageant dans l'eau, qui sont reçues au moyen d'un ensemble de réception (6) doté d'une pluralité de transducteurs électroacoustiques et/ou optoacoustiques (8) pour former des signaux de réception (20), **caractérisé en ce que** le procédé comporte les étapes suivantes consistant à :

   - former un spectre énergétique spatial à partir des signaux de réception (20) en fonction de toutes les directions de pointage à considérer,
   - sélectionner des niveaux significatifs (p(i)) à partir du spectre énergétique pour chaque direction de pointage (i) à considérer,
   - déterminer une matrice de modèles de signaux ($R_M$) à partir d'une réponse d'antenne ($a(k)$) associée à l'ensemble de réception (6) et des niveaux sélectionnés (p),
   - déterminer un vecteur directionnel de source ($a_{Quelle}(k)$) à partir de la réponse d'antenne ($a(k)$) et de la matrice de modèles de signaux ($R_M$),
   - vérifier, au moyen d'un module de vecteur directionnel de filtre (38) pour chaque direction de pointage (i) à considérer, si une source existe dans cette direction de pointage (i),
   - déterminer un vecteur directionnel de filtre ($a_{Filter}(k)$), dans lequel, dans le cas où aucune source n'existe dans la direction de pointage (i) à considérer, le vecteur directionnel de filtre ($a_{Filter}(k)$) correspond au vecteur directionnel de source ($a_{Quelle}(k)$) déterminé précédemment ou, dans le cas où une source existe dans la direction de pointage (i) à considérer, le vecteur directionnel de filtre ($a_{Filter}(k)$) est déterminé à partir de la matrice de modèles de signaux ($R_M$), de la réponse d'antenne ($a(k)$) et du niveau p(i) sélectionné pour cette direction de pointage (i) et
   - déterminer un vecteur de filtre optimisé en tenant compte du vecteur directionnel de filtre ($a_{Filter}(k)$) pour exécuter le filtrage spatial des ondes sonores (2) réfléchies ou émises par une source.

**2.** Procédé selon la revendication 1,
**caractérisé en ce que**
le spectre énergétique spatial est divisé en plusieurs spectres à bande étroite avec des fréquences centrales différentes les unes des autres.

**3.** Procédé selon la revendication 2,
**caractérisé en ce que**
la détermination du vecteur directionnel de filtre ($a_{Filter}(k)$) optimisé est effectuée en parallèle pour tous les spectres à bande étroite déterminés.

**4.** Procédé selon l'une des revendications précédentes,
**caractérisé en ce que**
une valeur seuil pour sélectionner les niveaux significatifs (p) est déterminée à partir du spectre énergétique spatial à l'aide de l'écart type ($\sigma$) des niveaux (p), les niveaux (p) dont l'amplitude dépasse la valeur seuil étant sélectionnés comme niveaux significatifs (p).

**5.** Procédé selon la revendication 4,
**caractérisé en ce que**
la valeur seuil pour sélectionner les niveaux significatifs (p) est définie en fonction des angles.

**6.** Procédé selon l'une des revendications précédentes,
**caractérisé en ce que**
si au moins une source est présente, le vecteur directionnel de filtre ($a_{Filter}(k)$) est déterminé en fonction de plusieurs directions de pointage (i) voisines.

**7.** Procédé selon l'une des revendications précédentes,
**caractérisé en ce que**
la vérification de la présence d'une source dans la direction de pointage (i) est effectuée à l'aide d'un procédé de détermination de la direction d'incidence, en particulier un procédé de beamforming (22) conventionnel, ou à l'aide de connaissances préalables de positions d'émetteur.

**8.** Dispositif destiné au filtrage spatial d'ondes sonores (2) réfléchies ou émises par une ou plusieurs sources et se propageant dans l'eau, qui peuvent être reçues au moyen d'un ensemble de réception (6) doté d'une pluralité de transducteurs électroacoustiques et/ou optoacoustiques (8) pour former des signaux de réception (20), **caractérisé par** les composants suivants :

- un module de transformation (24), qui est configuré pour former un spectre énergétique spatial à partir des signaux de réception (20) en fonction de toutes les directions de pointage à considérer,
- un module de sélection de source (30), qui est configuré pour sélectionner des niveaux significatifs (p(i)) à partir du spectre spatial pour chaque direction de pointage (i) à considérer,
- un module de modèles de signaux (34), qui est configuré pour déterminer une matrice de modèles de signaux ($R_M$) à partir d'une réponse d'antenne ($a(k)$) associée à l'ensemble de réception (6) et des niveaux sélectionnés (p),
- un module de vecteur directionnel de source (36), qui est configuré pour déterminer un vecteur directionnel de source ($a_{Quelle}(k)$) à partir de la réponse d'antenne ($a(k)$) et de la matrice de modèles de signaux ($R_M$),
- un module de vecteur directionnel de filtre (38), qui est configuré pour vérifier pour chaque direction de pointage (i) si une source existe dans cette direction de pointage (i) et pour déterminer un vecteur directionnel de filtre ($a_{Filter}(k)$) de la direction de pointage (i) à considérer, dans lequel, dans le cas où aucune source n'existe dans la direction de pointage (i), le vecteur directionnel de filtre ($a_{Filter}(k)$) correspond au vecteur directionnel de source ($a_{Quelle}(k)$) déterminé précédemment ou, dans le cas où une source existe dans la direction de pointage (i) à considérer, le vecteur directionnel de filtre ($a_{Filter}(k)$) peut être déterminé à partir de la matrice de modèles de signaux ($R_M$), de la réponse d'antenne ($a(k)$) et du niveau p(i) sélectionné pour cette direction de pointage (i) et
- un module de filtre (42), qui est configuré pour déterminer un vecteur de filtre optimisé pour exécuter le filtrage spatial des ondes sonores (2) réfléchies ou émises par une source en tenant compte du vecteur directionnel de filtre ($a_{Filter}(k)$).

**9.** Dispositif selon la revendication 8,

**caractérisé par**
une autre configuration du module de transformation (24) de manière à diviser le spectre énergétique spatial en plusieurs spectres à bande étroite avec des fréquences centrales différentes les unes des autres.

**10.** Dispositif selon la revendication 9,
**caractérisé par**
des moyens destinés à exécuter parallèlement la détermination du vecteur directionnel de filtre ($a_{Filter}(k)$) en parallèle pour tous les spectres à bande étroite déterminés.

**11.** Dispositif selon l'une des revendications 8 à 10,
**caractérisé par**
un module de valeur seuil (32), qui est configuré pour déterminer une valeur seuil à l'aide de l'écart type ($\sigma$) des niveaux (p) pour sélectionner les niveaux significatifs (p) à partir du spectre énergétique spatial, les niveaux (p) dont l'amplitude dépasse la valeur seuil pouvant être sélectionnés comme niveaux significatifs (p).

**12.** Dispositif selon la revendication 11,
**caractérisé par**
une autre configuration du module de valeur seuil (32) de manière à définir la valeur seuil pour sélectionner les niveaux significatifs (p) en fonction des angles.

**13.** Dispositif selon l'une des revendications 8 à 12,
**caractérisé par**
une autre configuration du module de vecteur directionnel de filtre (38) de manière à déterminer le vecteur directionnel de filtre ($a_{Filter}(k)$) en fonction de plusieurs directions de pointage (i) voisines si au moins une source est présente.

**14.** Dispositif selon l'une des revendications 8 à 13,
**caractérisé par**
une autre configuration du module de vecteur directionnel de filtre (38) de manière à vérifier si une source dans la direction de pointage (i) existe, à l'aide d'un procédé de détermination de la direction d'incidence, en particulier un procédé de beamforming (22) conventionnel, ou à l'aide de connaissances préalables de positions d'émetteur.

Fig. 1

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10027538 C1